# EUROPEAN PATENT APPLICATION

(11) **EP 0 717 573 A2**
(43) Date of publication of application: **19.06.1996**
(21) Application number: 95309185.7
(22) Date of filing: 18.12.1995
(51) Int. Cl.: H04Q 7/18, H04B 1/16

(54) **Power sarring function for a radio paging receiver**

(30) Priority: 16.12.1994 JP 312973/94
(71) Applicant: NEC CORPORATION, Tokyo (JP)
(72) Inventor: Kido, Toru, c/o NEC Corp., Tokyo (JP)
(74) Representative: Moir, Michael Christopher

(57) **Abstract**

In a radio paging receiver which receives a particular one of successive frames included in each cycle of a radio signal and which includes a receiving section (102) controllably activated for receiving the radio signal as a received signal during an activated period during which the receiver is activated, a frame defining portion (110, 112) defines a transmission period during which the particular one of the successive frames of each cycle is transmitted. A synchronization signal detecting section (104) detects a synchronization signal from the received signal and produces a detection signal. A counting area (113) counts the number of times of consecutive occurrences of nondetection which occurs when the synchronization signal detecting section does not detect the synchronization signal during the transmission period. A reception control section (111) controls the activated period on the basis of the number of times of consecutive occurrences of nondetection. In this event, the reception control section corrects the activated period into a new activated period given by adding a predetermined correction value to the activated period of a previous instance every time when the number of times of consecutive occurrences of nondetection becomes equal to a multiple of a predetermined number including unity. The reception control section reset resets a count value of the counting area in response to the detection signal.

## Description

### Background of the Invention:

This invention relates to a radio paging receiver. More specifically the invention relates to a radio receiver for receiving a radio signal including a plurality of successive frames in each cycle and, more particularly, to a radio paging receiver having a battery saving function.

A radio paging receiver of the type described, has a battery saving function such that a receiving section (or a demodulating section) is supplied with electric power to be activated only during a period of an assigned frame of successive frames of each cycle of a radio signal. The assigned frame of the successive frames of each cycle is assigned to the receiver. A power supply to the receiving section is interrupted in a remaining period to save power consumption. Inasmuch as the receiving section has a high power consumption, such battery saving is effective.

A transmission timing of the assigned frame including a call signal destined to the receiver is preliminarily assigned and is therefore predictable. Accordingly, the receiver can make the receiving section be activated at every transmission timing of the assigned frame of each cycle by predicting the transmission timing of the assigned frame assigned to the receiver.

As will later be described, a conventional radio paging receiver is incapable of achieving unconsumptive and optimum activation of the receiving section.

### Summary of the Invention:

It is an object of at least the preferred embodiments of the present invention to provide a radio paging receiver which is capable of controllably varying an on period of a receiving section by achieving unconsumptive and optimum activation of the receiving section to improve a battery saving efficiency.

Other such objects will become more clear as the description proceeds.

A radio paging receiver is described for use in a radio paging system comprising a base station which transmits a radio signal comprising successive cycles. Each cycle comprises a predetermined number of successive frames. Each of the successive frames comprises a synchronization signal and data succeeding the synchronization signal. A particular one of the successive frames of each cycle is assigned to the receiver. The receiver is for receiving the particular one of the successive frames of each cycle and for carrying out an announcement to a user of the receiver when the receiver detects, from the data of the particular one of the successive frames of each cycle, a particular call number assigned to the receiver.

According one aspect of this invention, the receiver comprises: receiving means controllably activated for receiving the radio signal as a received signal during an activated period during which the receiver is activated; particular frame defining means for defining a transmission period during which the particular one of the successive frames of each cycle is transmitted; synchronization detecting means for detecting the synchronization signal from the received signal to produce a detection signal; counting means for counting the number of times of consecutive occurrences of nondetection which occurs when the detecting means does not detect the synchronization signal during the transmission period; and reception control means for controlling the activated period on the basis of the number of times of consecutive occurrences of nondetection.

According to another aspect of the invention there is provided a radio paging receiver for use in a radio paging system comprising a base station which transmits a radio signal comprising successive cycles, each comprising a predetermined number of successive frames and each of said successive frames comprising a synchronization signal and data, said receiver being for receiving a particular one of the successive frames of each cycle, said receiver comprising:
receiving means for controlling an activated period for receiving said one frame; synchronization detecting means for detecting the presence of said synchronization signal; and
wherein the length of said activated period is dependent on the number of consecutive cycles in which of said synchronization signal is not detected.

According to a further aspect of the invention there is provided a method of conserving power in a radio pager receiver for receiving a radio signal comprising successive cycles, each comprising a predetermined number of successive frames, each of said successive frames comprising a synchronization signal and data, the method comprising the steps of a) receiving a particular one of the frames of each signal in an activated period; detecting the presence of said synchronization signal in said frame; and increasing the duration of said activated period dependent on the number of consecutive non occurrences of said synchronization signal.

### BRIEF DESCRIPTION OF THE DRAWING:

Fig. 1 is a signal format of transmission signal for use in describing operation of a conventional radio paging receiver and of a radio paging receiver according to this invention;
Fig. 2 is a time chart for use in describing operation of the conventional radio paging receiver;
Fig. 3 is another time chart for use in describing operation of the conventional radio paging receiver;
Fig. 4 is a block diagram of a radio paging receiver according to an embodiment of this invention;
Fig. 5 is a flow chart for use in describing operation of the radio paging receiver illustrated in Fig. 4;
Fig. 6 is another flow chart for use in describing operation of the radio paging receiver illustrated in Fig. 4;
Fig. 7 is a time chart for use in describing operation of the radio paging receiver illustrated in Fig. 4;
Fig. 8 is another time chart for use in describing operation of the radio paging receiver illustrated in Fig. 4; and
Fig. 9 is a block diagram of a reception control section of the radio paging receiver illustrated in Fig. 4.

### Description of the Preferred Embodiment:

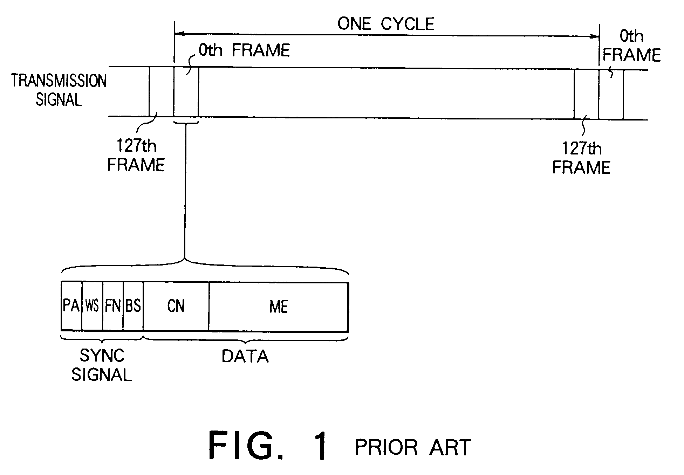

Referring to Fig. 1, a transmission signal (or a radio signal) is transmitted by a base station (later illustrated) included in a radio paging system. The transmission signal has successive cycles although only one cycle of the cycles is mainly illustrated. The transmission signal includes successive frames of, for example, 0th through 127th frames in each cycle. The 0th through the 127th frames of each cycle are similar in frame structure to one another although the frame structure of the 0th frame is only illustrated in Fig. 1. A radio paging receiver under consideration and other radio paging receivers are also included in the radio paging system and have call numbers different from one another and may be grouped into 0th through 127th groups. The 0th through the 127th groups are assigned with the 0th through the 127th frames of each cycle, respectively. It will be assumed that the radio paging receiver under consideration belongs to the 0th group assigned with the 0th frame of each cycle and that the radio paging receiver under consideration selectively receives the 0th frame of each cycle as a particular frame (or a assigned frame) of each cycle by a battery saving operation thereof.

The 0th frame of each cycle includes a preamble signal PA, a word synchronization signal WS, a frame number signal FN, a bit synchronization signal BS, a call number signal CN, and a message signal ME. The preamble signal PA is specified by a repetition of bit pulses which are of logic "1" and "0". The word synchronization signal WS succeeds the preamble signal PA. The word synchronization signal WS is specified by a predetermined pattern of bits and is used in establishing word synchronization in the radio paging receiver under consideration. The frame number signal FN succeeds the the word synchronization signal WS and represents a frame number of the frame under consideration (that is, the 0th frame). The frame number signal FN is used in establishing frame synchronization in the radio paging receiver under consideration. The bit synchronization signal BS succeeds the frame number signal FN. The bit synchronization signal BS is specified by a preselected pattern of bits and is used in establishing bit synchronization in the radio paging receiver under consideration. Inasmuch as the preamble signal PA, the word synchronization signal WS, the frame number signal FN, and the bit synchronization signal BS are used in establishing synchronization in the radio paging receiver under consideration, a combination of the preamble signal PA, the word synchronization signal WS, the frame number signal FN, and the bit synchronization signal BS is referred to as a synchronization (sync) signal.

Inasmuch as the radio paging receiver under consideration belongs to the 0th group, the base station transmits the call number signal CN representative of the call number of the radio paging receiver under consideration and the message signal ME representative of a message directed to the radio paging receiver under consideration by using the 0th frame. The call number signal CN follows the bit synchronization signal BS. The message signal ME follows the call number signal CN. A combination of the call number signal CN and the message signal ME is referred to as data (or transmission data).

Inasmuch as a transmission timing of the assigned (or particular) frame including the call number signal directed to the radio paging receiver under consideration is predictable, the radio paging receiver under consideration can make a receiving section thereof be activated at every transmission timing of the particular frame of each cycle by predicting the transmission timing of the particular frame assigned to the radio paging receiver under consideration as mentioned above.

That is, the receiving section (or a demodulating section) is selectively supplied with electric power to be activated only at the timing of every transmission frame as predicted. In a remaining period, the receiving section is inactivated to reduce power consumption.

In a conventional radio paging receiver, prediction of the transmission timing of the particular frame of each cycle is carried out in the following manner with reference to a count value counted by a frame counter which carries out a counting operation in synchronism with a specific system clock in the receiver.

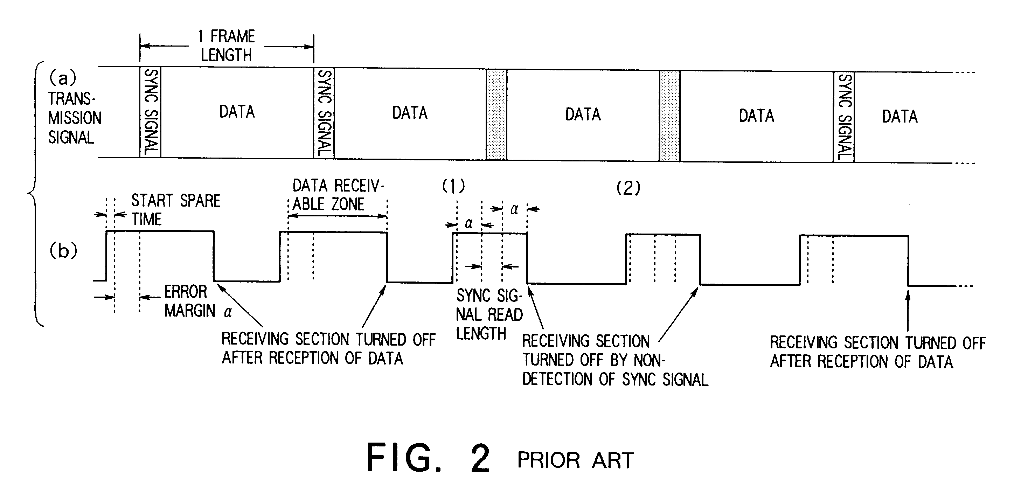

Fig. 2 is a time chart showing a relationship between a format of the transmission signal and a battery saving operation of the conventional radio paging receiver. In the figure, the transmission signal (a) is shown as a succession of the particular or assigned frames for simplicity of illustration. Supposing that the 0th frame of each cycle of the transmission signal of Fig. 1 is the particular frame assigned to the conventional radio paging receiver, only the 0th frames are illustrated in Fig. 2(a) among the 0th through the 127th frames of the transmission signal. Each of the particular frames comprises the synchronization (sync) signal inserted at a leading edge of each particular frame and the data (namely, the transmission data) following the synchronization signal.

A waveform illustrated in Fig. 2(b) shows a battery saving control signal. During a high level period, the receiving section is kept in an on state (an activated state). A part represented as a start spare time is a setup time of the receiving section. During this period, reception of the transmission data is not carried out.

The receiving section is turned on at a time instant earlier by (α + start spare time) than a synchronization signal transmission timing obtained by the above-mentioned frame counter. Herein, α represents an error margin for absorbing an error of the frame counter in the manner which will become clear as the description proceeds. By the use of a timer, the receiving section is turned off in the following manner. That is, the timer starts a counting operation or a timer operation of timing a predetermined time duration from the time instant at which the receiving section is turned on. If the synchronization signal is detected in the receiver before the timer finishes the timer operation, the timer is reset and again starts the timer operation. When the timer finishes the timer operation, the receiving section is turned off.

Each meshed portion in the particular frames of the transmission signal of Fig. 2(a) represents that no synchronization signal is detected by the receiver due to various factors such as noise, fading, and deviation from a receivable zone. In such synchronization undetected portions depicted at (1) and (2) in Fig. 2, the receiving section is controlled to be turned off (inactivated) at a timing later by α than the synchronization signal transmission timing, utilizing that time-over occurs in the timer.

On the other hand, the receiver has a synchronization correcting circuit (hereinafter called a bit synchronizing circuit) for correction at a bit level. The bit synchronizing circuit is for correcting a leading edge of a sampling clock for sampling reception data to make the sampling clock coincide with a level transition point (that is, a leading edge) of the reception data. Such correction is carried out by extending and reducing a low or a high level period of the clock. The bit synchronizing circuit is operated when the receiving section is in an on state.

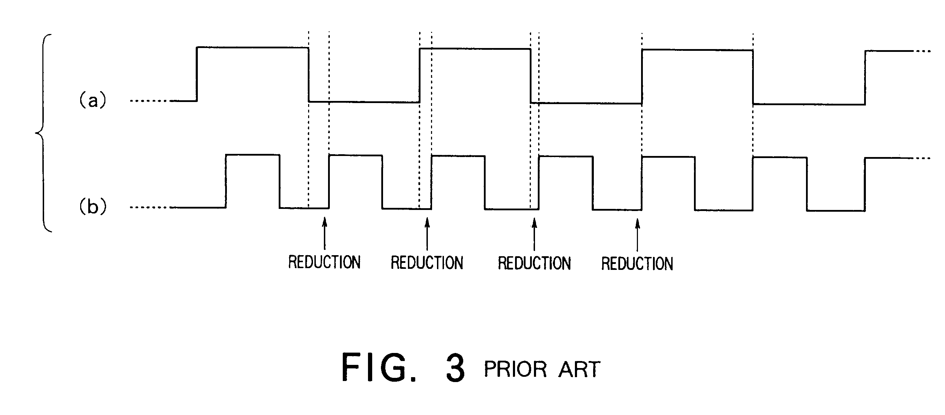

Fig. 3 shows an example of the correction of the clock by a bit synchronizing operation. In Fig. 3, a waveform (a) shows the reception data. Another waveform (b) shows the sampling clock (sampling at every trailing edge of the clock). In the example illustrated in Fig. 3, low level periods of the clock are shortened to thereby establish coincidence with the level transition point (that is, the leading edge) of the reception data. By the use of the synchronization correcting means, sampling is carried out at a point where the data level is stable.

The counting operation by the above-mentioned frame counter must be synchronized with the reception data at a bit level. Accordingly, the sampling clock illustrated in Fig. 3(b) is used as a reference clock (that is, the system clock) for a counting operation.

Inasmuch as the correction of the bit synchronizing operation is inevitably carried out by picking up a nonobjective signal of, for example, a noise signal even on nondetection of the synchronization signal during the on state of the receiving section, a time lag corresponding to bit synchronization is accumulated by repetition of the nondetection of the synchronization signal during the on state of the receiving section. As a consequence, an error is gradually grown between the count value of the frame counter and a real transmission timing of the synchronization signal. The above-mentioned value α is a fixed value determined so as to absorb the error. The correction amount by the bit synchronization is typically on the order between ± 2/100 bit and ± 4/100 bit at maximum per one bit. When the sampling clock is continuously corrected in a single direction by the bit synchronizing operation, the error will become maximum with respect to the system clock.

When the receiver is required to release synchronization with the system after the lapse of a relatively short time interval following nondetection of the synchronization signal and to re-establish synchronization, the margin α to absorb the error has such a scale that results in no substantial problem.

However, when the receiver is required to hold synchronization with the system for a long time duration following nondetection of the synchronization signal, the error at every particular frame is possibly accumulated correspondingly. Thus, the maximum error becomes so great. In order to absorb the maximum error by the use of the above-mentioned margin α, the margin corresponding to the maximum error is inevitably required every time when the receiving section is turned on. In case where the synchronization signal is relatively frequently received, the receiving section is kept in an on state for an unnecessarily long time duration and a battery saving efficiency is deteriorated.

In other words, when the margin α is selected as a short time interval, it is necessary to frequently carry out the above-mentioned re-establishment of the synchronization. When the margin α is selected as a large time interval, the battery saving efficiency is deteriorated.

This invention provides a radio paging receiver which is capable of controllably varying an on period of a receiving section in correspondence to an error accumulated at a frame counter as a result of consecutive occurrences of nondetection of a synchronization signal of a particular frame assigned to the receiver, thereby achieving unconsumptive and optimum activation of the receiving section to improve a battery saving efficiency.

According to this invention which will presently be described, upon consecutive occurrences of nondetection of the synchronization signal of the particular frame, correction is made by addition of a predetermined correction value to a receiving section on period of a previous instance every time when the number of times of nondetection is equal to a multiple of a predetermined number including unity. Thus, it is possible to control the receiving section on period in correspondence to the error accumulated at the frame counter. Therefore, unconsumptive and efficient battery saving can be achieved.

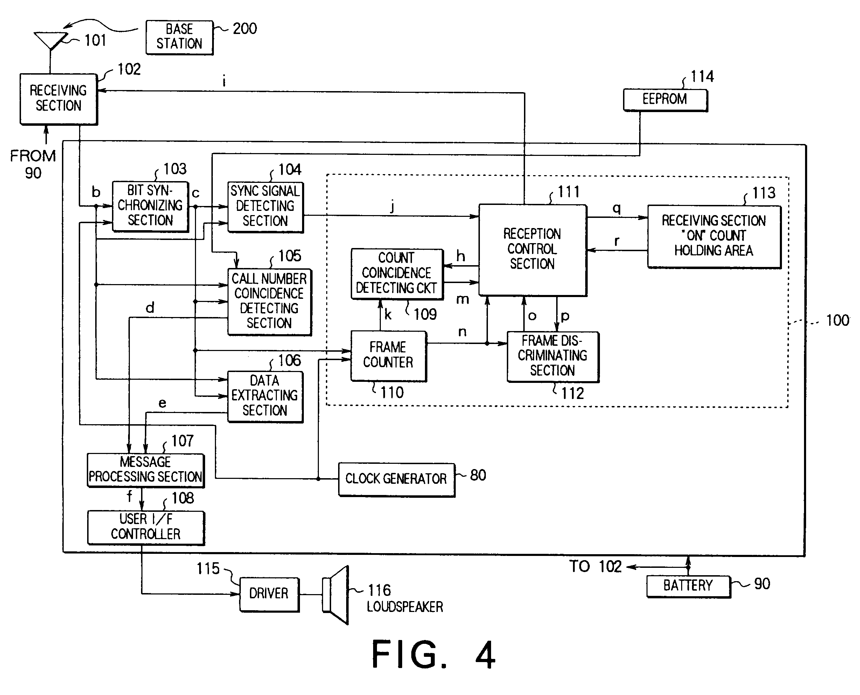

Fig. 4 shows, together with a base station 200, a radio paging receiver having a battery saving function according to an embodiment of this invention. In Fig. 4, the transmission signal (or the radio signal) illustrated in Fig. 1 is transmitted from the base station 200 as a modulation signal. The modulation signal is received through an antenna 101 and demodulated by a receiving section 102 as a demodulation signal b. The receiving section 102 carries out an intermittent receiving operation in response to a battery saving control signal i supplied from a reception control section 111. A bit synchronizing section 103 produces a data sampling reproduction clock (the above-mentioned sampling clock) c by the use of the demodulation signal b and a reference clock which is produced by a clock generator 80.

In Fig. 4, a synchronization (sync) signal detecting section 104 samples the demodulation signal b with reference to the reproduction clock c and produces a detection signal j upon detection of the synchronization (sync) signal illustrated in Fig. 1. An EEPROM (electrically erasable programmable read-only memory) 114 stores a particular call number assigned to the receiver illustrated in Fig. 4. The particular call number is set in a call number coincidence detecting section 105. A data extracting section 106 extracts the demodulation signal b word by word with reference to the reproduction clock c.

The call number coincidence detecting section 105 samples the demodulation signal b with reference to the reproduction clock c. Upon detection of coincidence between the particular call number and the call number of the call number signal CN (Fig. 1) of the data of the demodulation signal b, the call number coincidence detecting section 105 produces a detection signal d. In response to the detection signal produced upon detection of the particular call number, a message processing section 107 receives the message signal ME (Fig. 1) of reception data e from the data extracting section 106 and stores therein the message signal ME representative of the message directed to the receiver illustrated in Fig. 4. When such message storage operation is completed, the message processing section 107 produces a message storage completion signal f. A user interface control section 108 is responsive to the message storage completion signal f and controls a driver 115 to carry out announcement to a user of the receiver through a loudspeaker 116. The message of the message signal ME is displayed in a display unit (not shown) of the illustrated receiver in the manner known in the art.

A frame counter 110 is an internal counter for counting words and frames in response to the reproduction clock c while the receiving section 102 is in an on state. In this case, the frame counter 110 counts the words and the frames in response to the reproduction clock c which is synchronized with the reference clock (or an internal system clock) generated by the clock generator 80. While the receiving section 102 is in an off state, the frame counter 110 counts the reference clock (or the internal system clock) generated by the clock generator 80.

A count coincidence detecting circuit 109 produces a coincidence output signal m upon coincidence between a value h set by the reception control section 111 and a count value k counted by the frame counter 110.

A frame discriminating section 112 is responsive to a request p supplied from the reception control section 111 and calculates, with reference to a current value n counted by the frame counter 110, a timing o of the particular frame to be received. The timing thus calculated is delivered to the reception control section 111.

A receiving section "on" count holding area 113 is an area for holding the number of times of consecutive occurrences of nondetection when no synchronization signal is detected at the particular frame while the receiving section 102 is in the on state. The number of times held in the receiving section "on" count holding area 113 is incremented and reset in response to a control signal q produced by the reception control section 111.

In response to the coincidence output signal m of the count coincidence detection circuit 109, the reception control section 111 puts the receiving section 102 into the off state through a signal line i if the receiving section 102 is in the on state. Simultaneously, the reception control section 111 is supplied from the frame discriminating section 112 with the timing o of a next particular frame. Taking into consideration a start spare time and an error α at the frame counter 110, the reception control section 111 determines a timing at which the receiving section 102 is turned on next time, and sets this timing in the count coincidence detecting circuit 109 as the value h.

If the receiving section 102 is in the off state, the receiving section 102 is controlled to be turned on. Simultaneously, another timing of time-up of a search for the synchronization signal is determined taking α into account and is set to the count coincidence detecting circuit 109 as the value h. The error α at the frame counter 110 is determined in accordance with a count value r (representing the number of times of consecutive occurrences of nondetection) stored in the receiving section "on" count holding area 113.

In this embodiment, a predetermined time duration which is represented by a, is added to a previous value of α every time when the number of times of consecutive occurrences of nondetection is equal to a multiple of four. A resultant value is used as a new value of α. Thus, variable control is carried out so that the on period of the receiving section 102 gradually becomes longer. The predetermined time duration a is determined to be a value equal to a maximum error at the frame counter 110 that results from four times of search for the synchronization signal.

A portion 100 surrounded by a dotted line is a block diagram of an arrangement for controlling an on period of the receiving section 102 according to this invention.

Another portion which includes the portion 100, the sections 103, 104, 105, 106, 107, and 108, and the clock generator 80 and which is surrounded by a thick solid line, is supplied with electric power from a battery 90 and continuously takes the electric power therein to be activated. On the other hand, although the receiving section 102 is supplied with the electric power from the battery 90, the receiving section 102 takes the electric power therein to be activated only when the battery saving control signal i indicates "on" to put the receiving section 102 into the on state. That is, the the receiving section 102 does not take the electric power therein when the battery saving control signal i indicates "off" to put the receiving section 102 into the off state.

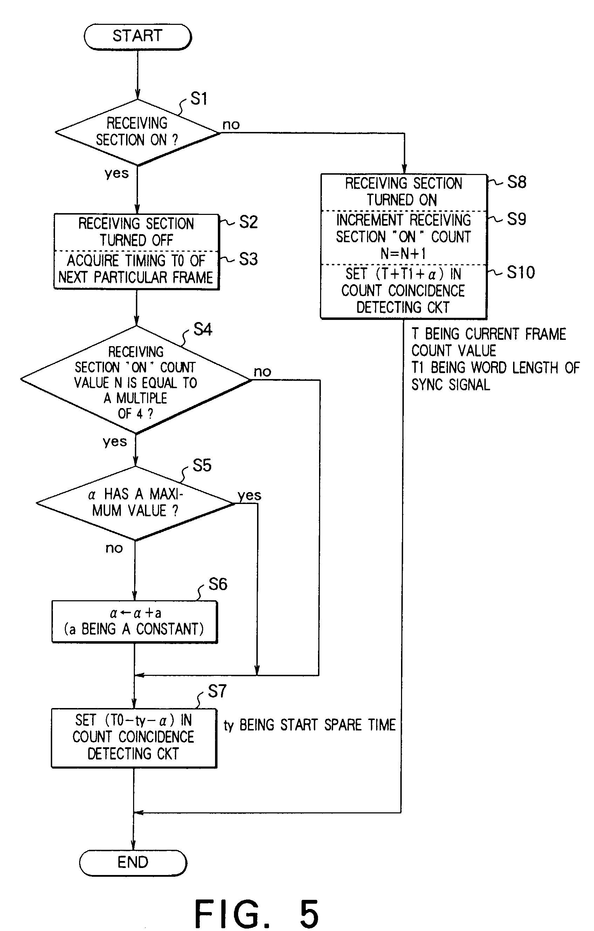

Turning to Fig. 5 with reference to Fig. 4 continued, description will be made as regards operation of the reception control section 111 of the receiver illustrated in Fig. 4 when the coincidence output signal m is produced by the count coincidence detecting circuit 109.

At a start of the operation, the coincidence output signal m is produced by the count coincidence detecting circuit 109.

In response to the coincidence output signal m of the count coincidence detecting circuit 109, judgement is made as to whether the receiving section 102 is in the on state or in the off state (step S1). When the receiving section 102 is in the on state, the coincidence output signal m represents the timing of time-up of the search for synchronization signal. In this case, the receiving section 102 is turned off (step S2) and gives the request to the frame discriminating section 112 to acquire a timing T0 of a next particular frame from the frame discriminating section 112 through a signal line o (step S3). A count value N is read from the receiving section "on" count holding area 113 and judgement is made as to whether or not N is equal to a multiple of four (step S4).

When N is equal to a multiple of four, a new value of α is given by (α + a) (step S6). In this event, judgement is made as to whether or not the value of α reaches a predetermined maximum value αₘₐₓ (step S5). When α = αₘₐₓ at the step S5, the value of α is not changed. When N is equal to a value other than a multiple of four at the step S4, the value of α is not changed.

After the value of α is determined, a timing (T0 - ty - a ) which is earlier than the timing T0 of the next particular frame by a sum of the start spare time ty and α, is set in the count coincidence detecting circuit 109 (step S7). The coincidence output signal m of the count coincidence detecting circuit 109 is waited.

When it is judged at the step S1 that the receiving section 102 is in the off state when the coincidence output signal m is produced by the count coincidence detecting circuit 109, the coincidence output signal m represents that the timing at which the receiving section 102 is turned on. In this case,the reception control section 111 puts the receiving section 102 into the on state (step S8). Simultaneously, the count value N held in the receiving section "on" count holding area 113 is incremented (step S9). In addition, a current frame count value T is read from the frame counter 110. A timing (T + T1 + α) obtained by adding a word length T1 of the synchronization signal and α to T, namely, a sum of the current frame count value T and a time duration until time-over of search for the synchronization signal is set in the count coincidence detecting circuit 109 (step S10). With the receiving section 102 kept in the on state, the coincidence output signal m of the count coincidence detecting circuit 109 is waited.

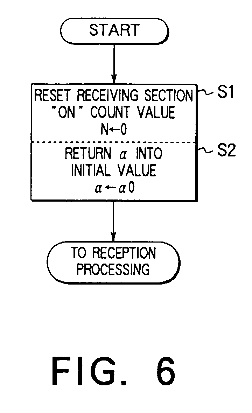

Turning to Fig. 6 with reference to Fig. 4 continued, description will be made as regards operation of the reception control section 111 when the synchronization signal is detected from the output of the synchronization signal detecting section 104 during the on state of the receiving section 102.

Upon detection of the synchronization signal, the count stored in the receiving section "on" count holding area 113 is reset into zero (step S1). The value of the error α is reset to an initial value α 0 (step S2). The value α 0 is determined to be a value equal to the maximum error at the frame counter 110 that is produced by the on state of the receiving section 102 until a is, at first, added.

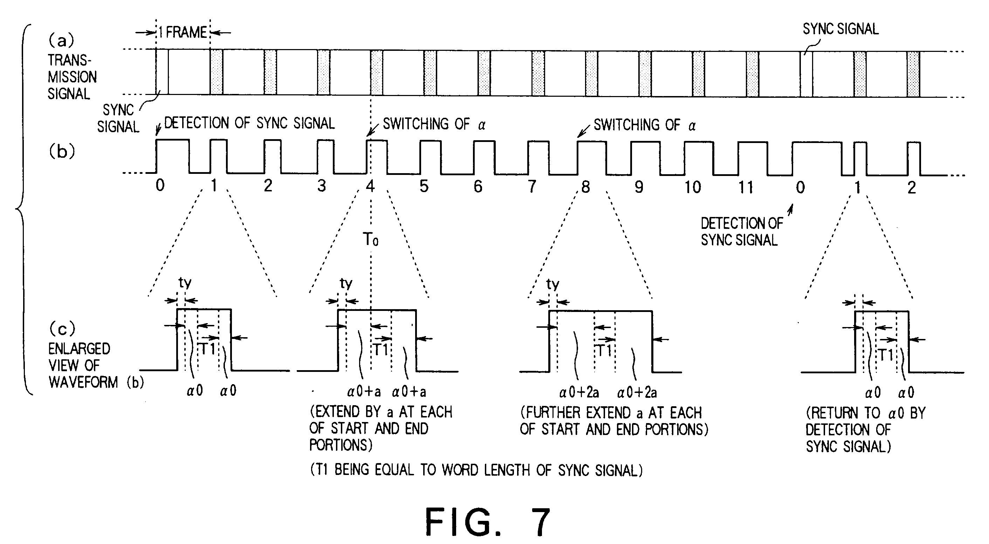

Turning to Fig. 7 with reference to Fig. 4 continued, description will be made as regards a timing of the battery saving control signal i produced by the reception control section 111. In Fig. 7, the transmission signal (a) is shown as a succession of the particular or assigned frames for simplicity of illustration like in Fig. 2. Like in Fig. 2, each meshed portion represents a synchronization signal which is not received by the receiver due to disturbance and the like.

A waveform illustrated in Fig. 7(b) represents the timing of the battery saving control signal i produced by the reception control section 111. A high level portion indicates that the receiving section 102 is in the on state. Numerals below the waveform (b) represent the count values held in the receiving section "on" count holding area 113. Fig. 7(c) is an enlarged view of the waveform (b). As illustrated, a receiving section on period is extended by 2a at the start and at the end when the count value is equal to a multiple of four. When the synchronization signal is received, the count value is reset into zero and the value of α is returned into the initial value α 0.

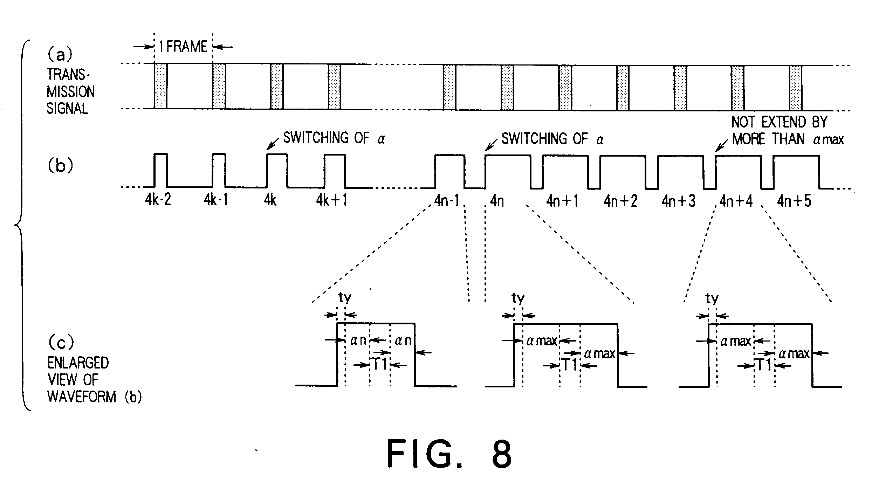

Fig. 8 is a view for describing the timing of the battery saving control signal i when nondetection of the synchronization signal consecutively occurs until the value of α reaches the maximum value αₘₐₓ. In Fig. 8, (a) represents the transmission signal like in Fig. 7(a). Each meshed portion represents a synchronization signal which is not received by the receiver due to disturbance and the like. A waveform (b) represents the timing of the battery saving control signal i produced by the reception control section 111.

Like in Fig. 8, a high-level portion represents an on state of the receiving section 102. Numerals below the waveform (b) represents count values held in the receiving section "on" count holding area 113. Fig. 8(c) is an enlarged view of the waveform (b). As illustrated, the receiving section on period is not changed by a value greater than αₘₐₓ.

In the foregoing embodiment, the correction value a is added every time when the number of times of consecutive occurrences of nondetection of the synchronization signal is equal to a multiple of four. Alternatively, the correction value a may be added every time when it is equal to a multiple of 1. In this event, more precise control is achieved. The maximum value αₘₐₓ of α is preliminarily selected to be a value such that the receiving section on periods never overlap one another and that occurrence of a continuous high level is avoided.

By the use of the radio paging receiver having a battery saving function according to this invention, it is possible to controllably vary the receiving section on period in correspondence to the error at the frame counter. Accordingly, even if the synchronization signal is not received for a certain time duration, it is assured that the receiving section is put in an on state at every transmission timing of the synchronization signal. Thus, an unnecessary extension of a receiving section on period is saved. As a consequence, improvement of the battery saving efficiency and prolongation of the battery life are expected. By preliminarily selecting αₘₐₓ, it is possible to control a worst value of the battery saving efficiency in case where α is increased.

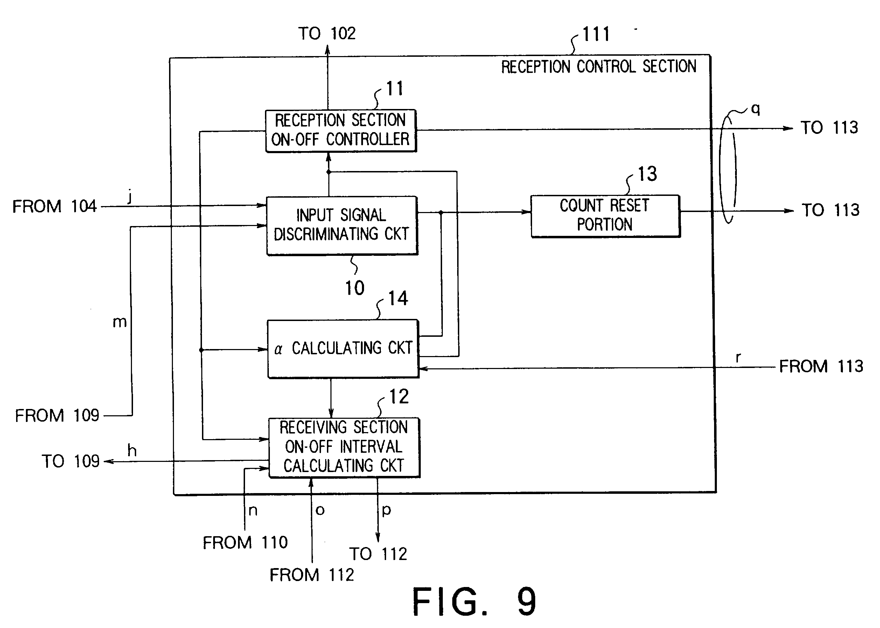

Turning to Fig. 9, the reception control section 111 includes an input signal discriminating circuit 10, a reception section on-off controller 11, a receiving section on-off interval calculating circuit 12, a count reset portion 13, and an α calculating circuit 14.

When the input signal discriminating circuit 10 detects, as an input signal thereof, the coincidence output signal m received from the count coincidence detecting circuit 109, the input signal discriminating circuit 10 sends a first detected signal to the reception section on-off controller 11 and to the α calculating circuit 14. On the other hand, when the input signal discriminating circuit 10 detects, as the input signal, the detection signal j which is produced when the synchronization signal detecting section 104 detects the synchronization signal, the input signal discriminating circuit 10 sends a second detected signal to the count reset portion 13 and to the α calculating circuit 14.

Referring again to Fig. 5 in addition to Fig. 9, when the reception section on-off controller 11 receives the first detected signal as a trigger, the reception section on-off controller 11 produces the battery saving control signal i (Fig. 4) to carry out on-off control of the receiving section 102 in the following manner.

In response to the first detected signal received from the input signal discriminating circuit 10, the reception section on-off controller 11 judges whether the receiving section 102 is in the on state or in the off state (step S1). When the receiving section 102 is in the on state, the reception section on-off controller 11 makes the receiving section 102 be turned off (step S2). When the reception section on-off controller 11 makes the receiving section 102 be turned off, the receiving section on-off interval calculating circuit 12 gives the request p to the frame discriminating section 112 and acquires the timing T0 of the next particular frame from the frame discriminating section 112 through a singal line o (step S3).

In response to the first detected signal received from the input signal discriminating circuit 10, the α calculating circuit 14 reads, as the count value r, the count value N from the receiving section "on" count holding area 113 and judges whether or not N is equal to a multiple of four (step S4). When N is equal to a multiple of four, a new value of α is given by (α + a) in the α calculating circuit 14 (step S6). In this event, the α calculating circuit 14 judges whether or not the value of α reaches a predetermined maximum value αₘₐₓ (step S5). When α = αₘₐₓ at the step S5, the value of α is not changed. When N is equal to a value other than a multiple of four at the step S4, the value of α is not changed in the α calculating circuit 14. After the value of α is determined, the α calculating circuit 14 gives the value of α to the receiving section on-off interval calculating circuit 12.

The receiving section on-off interval calculating circuit 12 calculates the timing (T0 - ty - α ) which is earlier than the timing T0 of the next particular frame by a sum of the start spare time ty and α. The receiving section on-off interval calculating circuit 12 sets the timing (T0 - ty - α ) in the count coincidence detecting circuit 109 as the value h (step S7).

When the reception section on-off controller 11 judges at the step S1 that the receiving section 102 is in the the off state, the reception section on-off controller 11 puts the receiving section 102 into the on state (step S8). Simultaneously, the reception section on-off controller 11 increments the count value N held in the receiving section "on" count holding area 113 through one of singal lines q (step S9). In addition, the reception section on-off controller 11 causes the receiving section on-off interval calculating circuit 12 to read the current frame count value T from the frame counter 110 as the current value n. The receiving section on-off interval calculating circuit 12 calculates the timing (T + T1 + α) by adding the word length T1 of the synchronization signal and α to T. The receiving section on-off interval calculating circuit 12 sets the timing (T + T1 + α) in the count coincidence detecting circuit 109 (step S10). With the receiving section 102 kept in the on state, the coincidence output signal m of the count coincidence detecting circuit 109 is waited.

Referring again to Fig. 6 in addition to Fig. 9, operation will be described in case where the input signal discriminating circuit 10 detects the detection signal j which is produced when the synchronization signal detecting section 104 detects the synchronization signal. In this case, the input signal discriminating circuit 10 sends the second detected signal to the count reset portion 13 and to the α calculating circuit 14 as mentioned above.

In response to the second detected signal, the count reset portion 13 resets the count stored in the receiving section "on" count holding area 113 into zero through another one of the singal lines q (step S1). When the α calculating circuit 14 receives the second detected signal, the α calculating circuit 14 resets the value of the error α to an initial value α 0 (step S2).

Each feature disclosed in the specification (which term includes the claims) and/or shown in the drawings may be incorporated in the invention independently of other disclosed and/or illustrated features.

The text of the abstract filed herewith is hereby deemed to be repeated here in full as part of the specification.

## Claims

1. A radio paging receiver for use in a radio paging system comprising a base station (200) which transmits a radio signal comprising successive cycles, each comprising a predetermined number of successive frames and each of said successive frames comprising a synchronization signal and data, said receiver being for receiving a particular one of the successive frames of each cycle, said receiver comprising:
receiving means (102) for controlling an activated period for receiving said one frame; synchronization detecting means (104) for detecting the presence of said synchronization signal; and
wherein the length of said activated period is dependent on the number of consecutive cycles in which of said synchronization signal is not detected.

2. A radio paging receiver for use in a radio paging system comprising a base station (200) which transmits a radio signal comprising successive cycles, each comprising a predetermined number of successive frames, each of said successive frames comprising a synchronization signal and data succeeding said synchronization signal, a particular one of said successive frames of each cycle being assigned to said receiver, said receiver being for receiving said particular one of the successive frames of each cycle and for carrying out an announcement to a user of said receiver when said receiver detects, from the data of said particular one of the successive frames of each cycle, a particular call number assigned to said receiver, said receiver comprising: receiving means (102) controllably activated for receiving said radio signal as a received signal during an activated period during which said receiver is activated; particular frame defining means (110, 112) for defining a transmission period during which said particular one of the successive frames of each cycle is transmitted; synchronization detecting means (104) for detecting said synchronization signal from said received signal to produce a detection signal; characterized by
counting means (113) for counting the number of times of consecutive occurrences of nondetection which occurs when said detecting means does not detect said synchronization signal during said transmission period; and
reception control means (111) for controlling said activated period on the basis of said number of times of consecutive occurrences of non-detection.

3. A radio paging receiver as claimed in claim 2, said receiver comprising clock reproducing means (103) for reproducing reproduced clocks from said received signal and clock generating means (80) for generating internal clocks, characterized in that said particular frame defining means comprises:
means (110) for counting, when said receiving means is activated, said reproduced clocks as a counted value and for counting, when said receiving means is not activated, said internal clocks as said counted value; and
means (112) for defining said transmission period with reference to said counted value.

4. A radio paging receiver as claimed in claim 2 or 3, characterized in that said reception control means comprises:
correcting means (14, 12) for carrying out a correcting operation of correcting said activated period into a new activated period given by adding a predetermined correction value to said activated period of a previous instance every time when said number of times of consecutive occurrences of non-detection becomes equal to a multiple of a predetermined number including unity.

5. A radio paging receiver as claimed in claim 4, characterized in that said correcting means keeps said new activated period unchanged even if said number of times of consecutive occurrences of non-detection becomes equal to said multiple of said predetermined number after said new activated period reaches a predetermined maximum value.

6. A radio paging receiver as claimed in any one of claims 2 to 5 characterized by:
resetting means (13) for resetting a count value of said counting means in response to said detection signal.

7. A method of conserving power in a radio pager receiver for receiving a radio signal comprising successive cycles, each comprising a predetermined number of successive frames, each of said successive frames comprising synchronization signal and data, comprising the steps of
a) receiving a particular one of the frames of each signal in an activated period;
b) detecting the presence of said synchronization signal in said frame; and
c) increasing the duration of said activated period dependent on the number of consecutive of non-detection of said synchronization signal.
